# EUROPÄISCHE PATENTSCHRIFT

(11) **EP 3 887 495 B1**
(45) Veröffentlichungstag und Bekanntmachung des Hinweises auf die Patenterteilung: **31.01.2024**
(21) Anmeldenummer: 19809753.7
(22) Anmeldetag: 21.11.2019
(51) Int. Cl.: C12C 7/06, C12C 7/04

(54) **VORRICHTUNG ZUM BRAUEN**
BREWING DEVICE
DISPOSITIF DE BRASSAGE

(30) Priorität: 27.11.2018 DE 102018130010
(43) Veröffentlichungstag der Anmeldung: 06.10.2021
(73) Patentinhaber: Thrun, Rüdiger, 87484 Nesselwang (DE)
(72) Erfinder: Thrun, Rüdiger, 87484 Nesselwang (DE)
(74) Vertreter: Kleine, Hubertus
(86) Internationale Anmeldenummer: PCT/EP2019/082150
(87) Internationale Veröffentlichungsnummer: WO 2020/109142

(56) Entgegenhaltungen:
- WO-A2-2010/000227
- CN-A- 106 635 579
- DE-A1-102013 101 436
- DE-C1- 19 505 808
- US-A1- 2018 094 229

## Beschreibung

Die Erfindung betrifft eine Vorrichtung zum Brauen, insbesondere von Bier, mit mindestens einem Maischebehälter und einem Würzekochbehälter und ein Verfahren zum Betrieb desselben.

Bei einer derartigen bekannten Vorrichtung wird in dem mindestens einen Maischebehälter eine Bierwürze aus Malzschrot hergestellt. Das Malzschrot wird dabei mehrere Stunden in Wasser gelagert, um eine Auslaugwirkung sicherzustellen. Nachteiligerweise ist die Auslaugwirkung nicht ausreichend.

Durch die AS 1 095 234 ist ein Sudzeugaufbau mit mehreren Maischegefäßen bekannt. Jedes Maischegefäß ist durch eine Zwischenwand in zwei halbkreisförmige Maischeteilgefäße aufgeteilt. Jedes Maischeteilgefäß weist einen Rührer auf, um eine Verwirbelung der Maische zu erreichen.

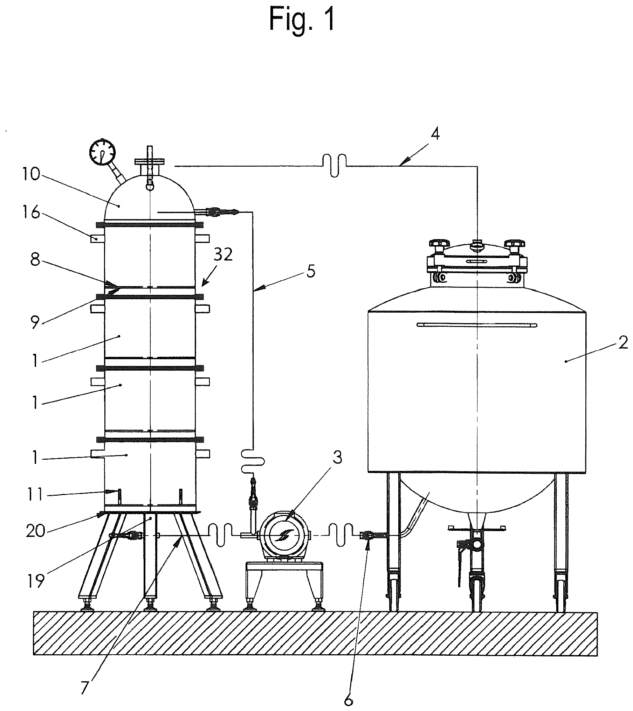

Die CN 106 635 579 A1 offenbart ein Bierherstellungsverfahren mit einer Mischvorrichtung. Diese wird als Zulauf-Wasser Mischer in Fig. 1 mit dem Bezugszeichen 2 bezeichnet. Er weist horizontale Sprühdüsen auf. Die Ausrichtung des zylindrischen Mischers ist vertikal allerdings ohne Öffnungen und ohne die Umgebung irgendeines Gehäuses wie z.B. eines Maischebehälters. Die Folgeverarbeitung erfolgt benachbart zu dem Zulauf-Wasser Mischer 2, wobei die Flüssigkeit über einen Schneckenförderer zu einem benachbarten Tanksegment transportiert wird.

Die Aufgabe der Erfindung wird somit darin gesehen, die Vorrichtung der eingangs genannten Art derart weiterzuentwickeln, dass eine große Auslaugwirkung erzielt wird.

Die erfindungsgemäße Vorrichtung zum Brauen, insbesondere von Bier, umfasst mindestens einem Maischebehälter mit einer Längsachse und einem Würzekochbehälter, wobei in den mindestens einen Maischebehälter eine erste Sprühvorrichtung am Bodenbereich des Maischebehälters derart angeordnet ist, dass die Sprührichtung quer zum Maischebehälter in einem Winkel von 60° bis 120° gegenüber der Längsachse des Maischebehälters erfolgt.

Zur Lösung der vorgenannten Aufgabe wird bei der vorgenannten Vorrichtung erfindungsgemäß vorgeschlagen, dass in dem mindestens einen Maischebehälter eine erste Sprühvorrichtung am Bodenbereich des Maischebehälters derart angeordnet ist, dass die Sprührichtung quer zum Maischebehälter in einem Winkel von 60° bis 120° gegenüber der Längsachse des Maischebehälters und besonders bevorzugt in horizontaler Richtung, also um 90° gegenüber der Längsachse des Maischebehälters, erfolgt. Trotz der vorgenannten Abweichung um 30° von der horizontalen Richtung wird die Sprührichtung nachfolgend als im Wesentlichen horizontal beschrieben.

Durch die erste Sprühvorrichtung wird eine zusätzliche Durchströmung der Maische in horizontaler Richtung oder in um max. 30° abweichend von der horizontalen Richtung erreicht, wodurch die Auslaugwirkung vergrößert wird. Denn durch die erste Sprühvorrichtung werden Nester innerhalb der Maische ausgelaugt, welche ohne die Sprühvorrichtung nicht ausgelaugt würden, wie sich bei Tests herausgestellt hat. Bei der bekannten Vorrichtung erfolgte bisher nur eine Durchströmung der Maische in vertikaler Richtung. Diese Durchströmung ist natürlich auch bei der erfindungsgemäßen Vorrichtung gegeben, wobei die Durchströmung der Maische in im Wesentlichen horizontaler und vertikaler Richtung auch eine Verwirbelung der Maische und damit eine große Auslaugung der Maische und somit auch eine kürzere Verweilzeit der Maische in dem Maischebehälter bewirkt. Der Begriff Maische kann alle Arten von Maische und auch Pellets wie Hopfenpellets umfassen. Die Sprührichtung der ersten Sprühvorrichtung kann in jeder denkbaren Ebene wirken, welche parallel zur Quermittelebene des Maischebehälters ist, und sie kann auch alle denkbaren Richtungen in dieser Ebene haben.

Die erfindungsgemäße Ausführungsform besteht darin, dass die erste Sprühvorrichtung mindestens ein im Maischebehälter vertikal angeordnetes und nach oben abgeschlossenes Sprührohr mit mindestens einer seitlichen Öffnung aufweist.

Um ein besonders intensives Auslaugen der Maische über die Höhe des Maischebehälters zu erhalten, ist es von Vorteil, wenn die Öffnungen des Sprührohres zumindest oberhalb von zumindest 20%, vorzugsweise oberhalb von zumindest 30%, der Höhe des Maischebehälters auf dessen Längsachse oder parallel zu dieser positioniert sind Besonders bevorzugt erstrecken sind die untersten Öffnungen bei zumindest 15% der Höhe angeordnet und die obersten Öffnungen unterhalb von 80% der Höhe des Maischebehälters

Bevorzugt weist das Sprührohr einen Innendurchmesser von zumindest 15 mm, vorzugsweise zwischen 20 bis 40 mm auf, so dass bestimmtes Volumen an Wasser bzw. flüssigen Medium mit einem entsprechenden Druck in die Maische einbringbar ist.

Das Sprührohr kann bevorzugt endständig spitz zulaufen. Dies ist insbesondere von Vorteil, da Malzschrot teilweise in einer flüssigkeitsdurchlässigen abgepackten oder tablettierter Form oder als Gebinde oder als Pad oder dergleichen geliefert werden kann. Das Sprührohr kann bei dieser Ausführungsvariante die Verpackung, z.B. ein Netz, durchstoßen und die Flüssigkeit bzw. das Wasser in das Malzschrot im verpackten Zustand einbringen.

Für einen modularen Aufbau ist es von Vorteil, wenn das Sprührohr einen endständigen spitz-zulaufenden Kegelaufsatz und einen Rohrschaft aufweist, wobei der Kegel auf den Rohrschaft lösbar aufgesetzt ist, so dass der Rohrschaft in die erste Sprühvorrichtung einer weiteren aufgesetzten erfindungsgemäßen Vorrichtung einführbar ist. Der Kegelschaft kann aus Metall oder Kunststoff gefertigt sein

Der Boden des Maischebehälters kann zudem vorteilhaft zumindest zweilagig aufgebaut ist umfassend ein flüssigkeitsdurchlässiges Stützblech, insbesondere ein Lochblech, und einen zum Innenraum gerichteten über dem Stützblech angeordneten Partikelfilter.

In diesem Kontext ist es ebenfalls von Vorteil, wenn das Sprührohr eine Wandung mit einer Wandstärke von mehr als 1,5 mm aufweist, wobei im Sprührohr Kanäle, insbesondere Bohrungen zur Vorgabe einer Sprührichtung vorgesehen sind. Bei schrägen angewinkelten Bohrungen, welche jenseits von 90° zur Längsachse ausgerichtet sind, empfiehlt sich eine Wandstärke von zumindest 2,5 mm oder mehr. Bei dieser Ausführungsvariante können bevorzugt auf aus dem Rohrumfang herausstehende Vorsprünge, welche das Eindringen des Sprührohres in das verpackte Malzschrot verhindern, verzichtet werden.

Durch die seitliche Öffnung tritt das Wasser in im Wesentlichen horizontaler Richtung aus und ermöglicht somit eine zusätzliche Durchströmung der Maische in im Wesentlichen horizontaler Richtung. Vorteilhafterweise weist das Sprührohr drei seitliche Öffnungen im Winkel von 120 Grad am Umfang auf. Dadurch kann die das Sprührohr umgebende Maische in verschiedene im Wesentlichen horizontale Richtungen durchströmt werden. Das mindestens eine Sprührohr kann zentral oder dezentral in dem Maischebehälter angeordnet sein. Damit die gesamte Maische in dem Maischebehälter von der im Wesentlichen horizontalen Durchströmung optimal erfasst wird, sieht eine weitere Ausführungsform der Erfindung vor, dass mehrere, vorzugsweise sechs, vorzugsweise gleichmäßig verteilte Sprührohre in dem Maischebehälter vorgesehen sind.

In dem Maischeprozess kommt es in der Regel zu einer Trübung der Flüssigkeit durch Heraufschwemmen kleiner Teilchen. Damit diese Teilchen beim Ablassen beispielsweise der Bierwürze zurückgehalten werden, sieht eine Weiterbildung der Erfindung vor, dass am Bodenbereich des mindestens einen Maischebehälters ein Trägersieb und ein Partikelsieb vorgesehen sind. Innerhalb des Maischebehälters kann auch noch ein Filterkorb angeordnet sein. Zusätzlich wird das Trägersieb dazu benutzt, als Halterung für die erste Sprühvorrichtung zu dienen. Eine weitere Ausführungsform der Erfindung sieht deshalb vor, dass die erste Sprühvorrichtung auf dem Trägersieb angeordnet ist. Die Sprührichtung der erste Sprühvorrichtung ist vorteilhafterweise verstellbar, so dass bei der Vorrichtung ausgetestet werden kann, welche Sprührichtung in im Wesentlichen horizontaler Ebene und auch welche Höhenposition innerhalb des Maischebehälters eine gute Auslaugwirkung ermöglicht. Verstellbar bedeutet dabei, dass bei Verstellen in im Wesentlichen horizontaler Ebene andere Sprührohre mit anderen Winkelpositionen für die seitlichen Öffnungen eingesetzt werden. Bei Verstellen in vertikaler, also axialer Richtung werden andere Sprührohre mit anderen Längen eingesetzt, so dass die seitlichen Öffnungen höher und tiefer innerhalb des Maischebehälters angeordnet sind.

Damit die erfindungsgemäße Vorrichtung sowohl für kleinere Mengen an Maische als auch für größere Mengen verwendet werden kann, sieht eine bevorzugte Ausführungsform der Erfindung vor, dass mehrere Maischebehälter in einer turmartigen Anordnung übereinander angeordnet sind. Je nach Bedarf können somit auch zwei oder drei oder vier Maischebehälter übereinandergesetzt werden, um größere Mengen an Maische zu verarbeiten. Wenn mehrere Maischebehälter verwendet werden, so haben das Trägersieb und das Partikelsieb den weiteren Vorteil, dass sie ein Vermischen einer Maischegabe in einem Maischebehälter mit der Maischegabe in dem benachbarten Maischebehälter verhindern.

Jeder der Maischebehälter der turmartigen Anordnung ist dabei als eine in sich funktionale Baueinheit, vorzugsweise mit einem Trägersieb und einem Partikelsieb und einer ersten Sprühvorrichtung, ausgebildet. Jede Baueinheit weist eine Gehäusewandung auf, welche einen Hohlraum begrenzt. Die Baueinheiten können bausatzartig miteinander lösbar verbunden sein. Somit ist jede Baueinheit der turmartigen Anordnung ein gesonderter und in sich funktionsfähiger Maischebehälter. Die DE 42 41 801 A1 offenbart demgegenüber übereinander-angeordnete lediglich Schalen, welche nach oben hin geöffnet sind und somit keinen abgeschlossenen Hohlraum und somit keine funktionale Baueinheit bilden.

Die Maischebehälter können vorteilhaft als Baueinheiten über eine Spundverbindung zu der turmartigen Anordnung miteinander verbunden sein. Dabei werden zwei Flansche über einen Spannring übergriffen und durch Anziehen des Spannrings miteinander verbunden. Spundverbindungen sind beispielsweise zum Verschluss eines Fasses mit einem Deckel, einem sogenannten Spundfass, bekannt.

Eine Weiterbildung der Erfindung sieht vor, dass eine zweite Sprühvorrichtung im oberen Bereich des mindestens einen Maischebehälters oder bei einer turmartigen Anordnung mit mehreren Maischebehältern im oberen Bereich des obersten Maischebehälters vorgesehen ist. Diese zweite Sprühvorrichtung hat unterschiedliche Vorteile. Einerseits kann damit der Maischekuchen von oben her gleichmäßig und flächig bewässert werden, was sich durch das freie Gefälle bei mehreren übereinander angeordneten Maischebehältern positiv auf die Ausbeute und die Würze auswirkt. Andererseits kann damit auch die Siebkombination aus Trägersieb und Partikelsieb im obersten Maischebehälter gereinigt werden. Als zweite Sprühvorrichtung wird vorzugsweise ein rotierender Zielstrahlreiniger verwendet. Besonders bevorzugt kann allerdings ein Schwallreiniger als zweite Sprühvorrichtung eingesetzt werden. Schwallreiniger sind zur Reinigung von Tanks und Behälter sind an sich bekannt, allerdings sind die Rückstände von Malz in einem Maischebehälter besonders hartnäckige Rückstände. Der Schwallreiniger als rotierender Sprühkopf weist dabei eine breitflächigere Reinigung als ein Zielstrahlreiniger auf und ist daher bevorzugt. Effiziente Schwallreiniger erreichen die Reinigung des Behälters nach dem Ablassen der Maische aber auch während der Maischebildung die Zufuhr von Brauwasser von oben ohne die Ausbildung von Strömungskanälen innerhalb der Maische, so dass trockene Stärkenester innerhalb der Maische verhindert werden.

Die Vorrichtung weist vorzugsweise zumindest eine erste Flüssigkeitszuleitung mit einem Ventil auf, welche vorzugsweise in den Bodenbereich des Maischebehälters mündet und eine zweite Flüssigkeitszuleitung mit einem Ventil, mit welcher Flüssigkeit über die erste Sprühvorrichtung in den Maischebehälter einleitbar ist, wobei die Steuerung des Flüssigkeitszulaufs über die erste Flüssigkeitszuleitung und über die zweite Flüssigkeitszuleitung über eine Ventilsteuerung der beiden vorgenannten Ventile erfolgt. Selbstverständlich können weitere Flüssigkeitszuleitungen für die zweite und dritte Sprühvorrichtung vorhanden sein, welche ebenfalls Teil des Flüssigkeitszulaufs sind.

Um ein Hochdrücken des Malzes zu verhindern, ist unterhalb der zweiten Sprühvorrichtung, im oberen Drittel des Maischebehälters ein Flächenelement angeordnet, welches zumindest zweilagig aufgebaut ist, umfassend ein flüssigkeitsdurchlässiges Stützblech, insbesondere ein Lochblech, und einen zum Innenraum gerichteten über dem Stützblech angeordneten Partikelfilter. Das Flächenelement erstreckt sich über den gesamten Querschnitt des Maischebehälters.

In einem erfindungsgemäßen Verfahren zum Betrieb der erfindungsgemäßen Vorrichtung wird die Ventilsteuerung derart geschaltet, dass die beiden vorgenannten Ventile zum Druckaufbau während des Befüllungsvorgangs wechselweise geschlossen werden. So kann ein Druckaufbau von der Bodenseite her erfolgen, während das Sprührohr gerade Flüssigkeit in die Maische sprüht und umgekehrt. Die Ventilsteuerung ermöglicht zusätzlich oder alternativ zu den weiteren vorgenannten Mitteln eine Verminderung der Ausbildung oder eine Zerstörung von vertikalen und horizontalen Strömungskanälen, so dass weniger Stärkenester auftreten.

Es ist auch z.B. in einem weiteren Betriebsmodus möglich, die Flüssigkeit, z.B. Brauwasser, über eine Druckwelle in den Maischebehälter einzuleiten. Hierfür werden beide Ventile zeitgleich über ein vorbestimmtes Zeitintervall zur Generierung eines Flüssigkeitsdrucks geschlossen.

Eine besonders bevorzugte Ausführungsform der Erfindung sieht vor, dass eine dritte Sprühvorrichtung mit zwei Sprühdüsen vorgesehen ist, welche an der Wandung des mindestens einen Maischebehälters sich gegenüberliegend und im Wesentlichen horizontal oder parallel und im Wesentlichen horizontal angeordnet sind. Durch die Sprühwirkung der Sprühdüsen kommt es bei der gegenüberliegende Anordnung zu zwei entgegengerichteten Umdrehungen von zwei Maischehälften, wodurch Verwirbelungen der Maische entstehen, was sich wiederum positiv auf die Ausbeute und die Würze, insbesondere in Verbindung mit der im Wesentlichen horizontalen Besprühung durch die erste Sprühvorrichtung auswirkt. Durch die parallele Anordnung kommt es zu zwei gleichgerichteten Umdrehungen von zwei Maischehälften, wodurch andere Arten der Verwirbelung der Maische insbesondere in Verbindung mit der im Wesentlichen horizontalen Besprühung durch die erste Sprühvorrichtung entstehen. Die Sprührichtungen der ersten und der dritten Sprühvorrichtung können durch die Verstellbarkeit der ersten Sprühvorrichtung praktisch alle Variationen durchlaufen. Sie können entgegengesetzt, parallel oder quer oder eine Kombination aus den drei Grundmöglichkeiten sein.

Die Erfindung wird nachstehend anhand der Zeichnung näher erläutert. Die Zeichnung zeigt Ausführungsbeispiele der Erfindung. Hierbei stellen dar:
- Fig. 1: eine schematische Ansicht der Vorrichtung mit vier Maischebehältern in turmartiger Anordnung und
- Fig. 2: einen schematischen Längsschnitt einer turmartigen Anordnung von zwei Maischebehälter;
- Fig. 3: eine schematische Ansicht einer zweiten erfindungsgemäßen Ausführungsvariante;
- Fig. 4: Detailansicht eines Abschnitts einer Sprühvorrichtung in der zweiten erfindungsgemäßen Ausführungsvariante und
- Fig. 5: eine schematische Ansicht einer dritten erfindungsgemäßen Ausführungsvariante.

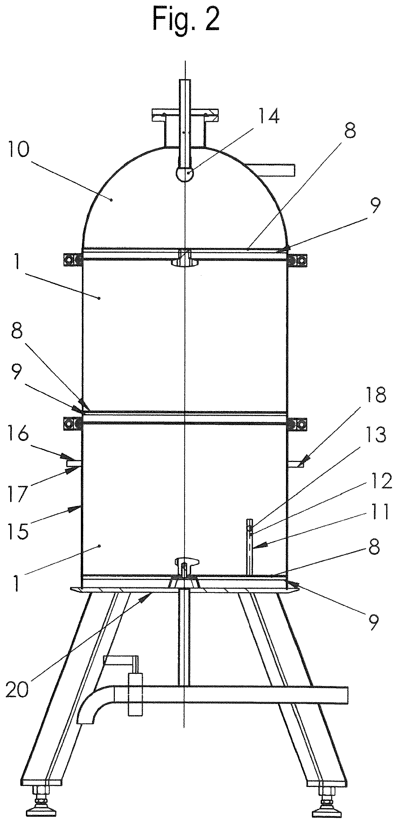

Die Vorrichtung zum Brauen weist eine turmartige Anordnung von vier übereinander angeordneten Maischebehältern 1, einen Würzekochbehälter 2, eine Pumpe 3, eine erste Rohrleitung 4, eine zweite Rohrleitung 5, eine dritte Rohrleitung 6 und eine vierte Rohrleitung 7 auf. Zwischen jedem der Maischebehälter 1 ist eine Siebkombination aus einem Trägersieb 8 und einem Partikelsieb 9 vorgesehen. Das Trägersieb 8 ist eher grobporig und kann ein Lochblech sein. Das Partikelsieb 9 ist feinmaschig. Eine derartige Siebkombination ist auch an dem untersten Maischebehälter 1 und an dem obersten Maischebehälter 1 im oberen Bereich vorgesehen. Die einzelnen Maischebehälter 1 sind rohrförmig ausgebildet und mit den nachfolgenden Maischebehältern 1 über eine Dichtung mit Klemmschellen verbunden. Der oberste Maischebehälter 1 wird durch einen Deckel 10 abgeschlossen. Am Bodenbereich jedes Maischebehälters 1 ist eine erste Sprühvorrichtung 11 auf dem Trägersieb 8 angeordnet. Die erste Sprühvorrichtung 11 weist insgesamt sechs vertikal angeordnete Sprührohre 12 auf. Die Sprührohre 12 sind in horizontaler Ebene kreisförmig und gleichmäßig innerhalb des Maischebehälters 1 verteilt, sodass sich die Sprührohre 12 auf einem Kreis im Abstand von 60 Grad befinden. Der Durchmesser des Kreises für die Sprührohre 12 ist etwa halb so groß wie der Durchmesser des Maischebehälters 1. Der Sprührohrekreisdurchmesser kann aber auch andere Werte haben. Jedes Sprührohr 12 weist drei seitliche Öffnungen 13 im Winkel von 120 Grad am Umfang auf. Nach oben hin ist jedes Sprührohr 12 abgeschlossen. Durch die erste Sprühvorrichtung 11 werden Nester innerhalb des Maischekuchens ausgelaugt, welche ohne die Sprühvorrichtung 11 nicht ausgelaugt würden, wie sich bei Tests herausgestellt hat. Innerhalb des Deckels 10 befindet sich an höchster Stelle eine zweite Sprühvorrichtung 14 in Form eines rotierenden Zielstrahlreinigers. Damit wird die oberste Siebkombination bestehend aus Trägersieb 8 und Partikelsieb 9 des obersten Maischebehälters 1 von oben her durchgereinigt. Gleichzeitig kann der gesamte Maischekuchen in den verschiedenen Maischebehältern 1 von oben her gleichmäßig und flächig bewässert werden. An einer Wandung 15 jedes Maischebehälters 1 ist eine dritte Sprühvorrichtung 16 mit zwei Sprühdüsen 17, 18 vorgesehen. Die dritte Sprühvorrichtung 16 kann an unterschiedlichen Höhen der Wandung 15 angeordnet sein. Bei dem in Fig.2 dargestellten Ausführungsbeispiel sind die Sprühdüsen 17, 18 im oberen Bereich des Maischebehälters 1 angeordnet. Die Sprühdüsen 17, 18 sind gegenüberliegend angeordnet und erstrecken sich horizontal. Bei Betrieb versetzen die Sprühdüsen 17, 18 den Maischekuchen innerhalb des Maischebehälters 1 in zwei kreisförmige aber entgegengerichtete Umdrehungen. Die Umdrehungen verlaufen im Wesentlichen in einer horizontalen Ebene, welche parallel zu einer Quermittelebene des Maischebehälters 1 ist. In den Sprühdüsen 17, 18 kann eine höhere Fließgeschwindigkeit der Flüssigkeit als wie in den Sprührohren 12 gegeben sein, um durch das stärkere seitliche Einsprühen über die Sprühdüsen 17, 18 eine stärkere Verwirbelung zu erzielen.

Über die erste Rohrleitung 4 ist der Deckel 10 mit der Oberseite des Würzekochbehälters 2 verbunden. Über die zweite Rohrleitung 5 ist der Deckel 10 mit der Pumpe 3 und der vierten Rohrleitung 7 verbunden. Über die Rohrleitung 6 ist die Unterseite des Würzekochbehälters 2 mit der Pumpe 3 verbunden. Über die Rohrleitung 7 ist die Pumpe 3 mit einem unteren Rohreinlass 19 des untersten Maischebehälters 1 verbunden. Der Rohreinlass 19 ist zentral in einem Flanschboden 20 des untersten Maischebehälters 1 angeordnet.

Die erfindungsgemäße Vorrichtung kann zum Brauen von Bier, Whiskey oder anderen Getränken verwendet werden. Bei Betrieb wird in dem Würzekochbehälter 2 mittels eines Gasbrenners oder einer elektrischen Heizung Wasser auf einzelne Temperaturstufen erwärmt. Vom Würzekochbehälter 2 wird das Wasser über die dritte Rohrleitung 6 und die vierte Rohrleitung 7 von unten her über den untersten Maischebehälter 1 in die anderen Maischebehälter 1 geleitet. Die Maische schwimmt dabei anfänglich auf dem Wasser auf und durch die Siebkombinationen wird verhindert, dass die Maische von einem Maischebehälter 1 in den nächsten Maischebehälter 1 gelangt. Somit ist pro Maischebehälter 1 immer eine definierte Maischemenge gegeben. Der Würzekochbehälter 2 wird dann dazu benutzt, die notwendige Wassertemperatur in den verschiedenen Maischebehältern 1 entweder zu halten oder auch zu erhöhen, je nach Brauvorgang. In einem kleinen Kreislauf wird nur die Flüssigkeit in den einzelnen Maischebehältern 1 umgepumpt. Der kleine Kreislauft umfasst die zweite Rohrleitung 5, die Pumpe 3 und die vierte Rohrleitung 7. In einem großen Kreislauf wird die Flüssigkeit aus den verschiedenen Maischebehältern 1 über die erste Rohrleitung 4 in den Würzekochbehälter 2 gebracht. Der große Kreislauf umfasst zusätzlich die zweite Rohrleitung 6 und die vierte Rohrleitung 7. Der Würzekochbehälter 2 weist einen Doppelmantel auf, in welchem auch Wasser erhitzt wird. Nach Abschluss des Sudvorgangs in den Maischebehältern 1 wird aus dem Doppelmantel des Würzekochbehälters 2 heißes Wasser entnommen und von oben her über die zweite Sprühvorrichtung 14 über die Maische geströmt, um die gesättigte Restflüssigkeit in den Maischebehältern 1 in den Würzekochbehälter 2 hinüber zu pumpen bzw. zu drücken. Dies wird so lange durchgeführt, bis die gewünschte Wassermenge vor dem Kochen des Suds erreicht ist. Danach wird der Vorgang gestoppt und der Sud im Würzekochbehälter 2 gekocht. Parallel zum Kochen werden die verschiedenen Maischebehälter 1 entleert und gereinigt und bis zum Ende des laufenden Kochvorgangs wieder neu beschickt. Die Maischebehälter 1 können dann mit vorgewärmtem Wasser aus dem Doppelmantel des Würzekochbehälters 2 wieder zum neuen Einmaischen genutzt werden, um somit einen weiteren Sud vorzubereiten. Bis der Kochvorgang des ersten Sudes abgeschlossen ist und das beispielsweise Bier in einen weiteren nicht dargestellten Garbehälter umgepumpt ist, ist der Einmaischvorgang des zweiten Sudes abgeschlossen.

Durch die erste und die dritte Sprühvorrichtung 11, 16 und die damit erzielten Verwirbelungen der Maische wird eine große Auslaugwirkung der Maische und auch eine kürzere Verweilzeit der Maische in dem Maischebehälter 1 erreicht. Zusätzlich sind die erste und die dritte Sprühvorrichtung 11, 16 in ihren Sprührichtungen verstellbar. Durch das Zusammenwirken der beiden Sprühvorrichtungen 11, 16 und die große Variationsbreite der Sprührichtungen kann eine große Bandbreite von Verwirbelungen der Maische derart erzielt werden, dass für ein bestimmtes Braugut das optimale Brauergebnis erreicht wird.

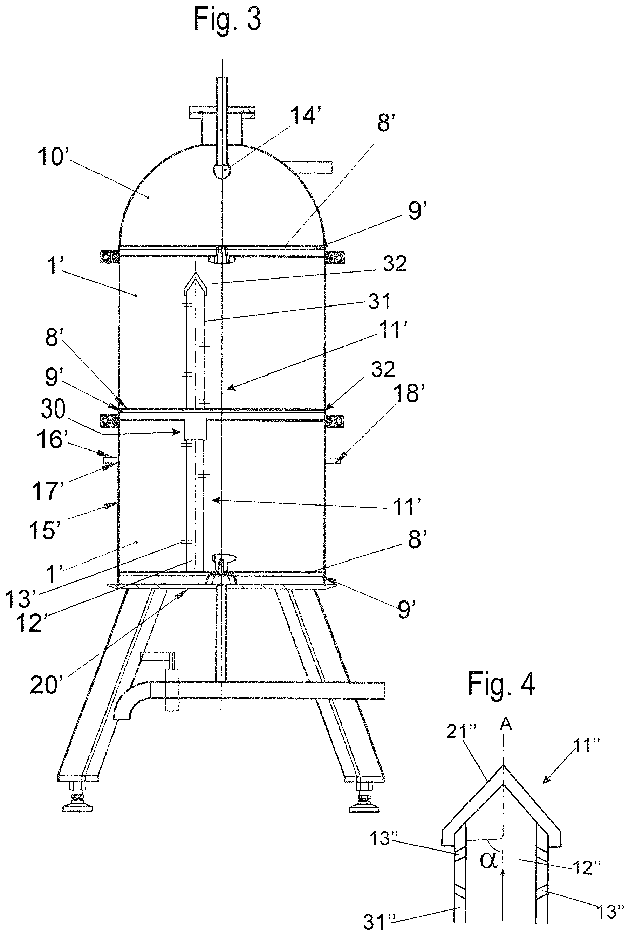

Fig. 3 zeigt mehrere modular turmartig übereinander-angeordnete Maischebehälter 1' einer zweiten Ausführungsvariante der vorliegenden Erfindung. Hier ist die Sprühvorrichtung 11' als Sprührohr 12' ausgebildet, welches sich über zumindest 90% der Höhe des jeweiligen Maischebehälters 1' erstreckt.

Das Sprührohr weist Öffnungen 13' auf, welche vorzugsweise 15% der Höhe, besonders bevorzugt auf 20% der Höhe beginnen und sich etwa bis auf 80% der Höhe erstrecken. In Fig. 3 ist ebenfalls eine zweite Sprühvorrichtung 14' in Form eines Schwallreinigers angeordnet. Der Schwallreiniger ermöglicht einen breitflächigen Eintrag von Brauwasser unter einem großen Einstrahlwinkel. Dies ist ein besonderer Vorteil. Zugleich kann auch der Überlauf von Brauwasser, bei der Befüllung von unten, also bodenseitig, über den Schwallreiniger erfolgen.

Eine weitere seitlich-einstrahlende dritte Sprühvorrichtungen 16' mit dazugehörigen Sprühdüsen 17' und 18' kann ebenfalls vorhanden sein. Die Sprühdüsen 17' und 18' können allerdings, wie im oberen Maischebehälter 1' dargestellt, optional auch demontiert werden.

Das System in Fig. 3 ist erkennbar modular aufgebaut. Das Sprührohr 12' verfügt über einen Rohrschaft 31 mit den Öffnungen 13' und kann einen endständigen Kegel 32 aufweisen, welcher das Sprührohr 12' endständig verschließt. Der Kegel 32 ist allerdings lösbar, z.B. durch Verschraubung, am Rohrschaft 31 festgelegt.

Werden nun zwei Maischebehälter 1' als Module turmartig übereinander angeordnet, so wird der Kegel 32 des unteren Moduls 1' abgenommen und die Rohrschäfte werden miteinander verbunden, z.B. ineinandergesteckt. Optional kann dieses Ineinanderstecken durch einen Anschlussstutzen 30 erfolgen, welcher unterhalb des Bodens an das Sprührohr 12' lösbar angeschlossen, vorzugsweise verschraubt werden kann. Dieser Anschlussstutzen 30 ist allerdings nicht zwingend notwendig, sofern z.B. der Rohrschaft des unteren Moduls direkt in den Rohrschaft des oberen Moduls hineinragt.

Vor dem Abnehmen des in Fig. 3 nicht-dargestellten Kegels 31 kann allerdings das untere Modul 1' zuvor noch mit einem Malzpad, also einem mit Textil verpackten flüssigkeitsdurchlässigen Malzballen versehen werden. Dabei durchsticht der Kegel 31 die Verpackung des Malzpads.

Analog zu Fig. 1 und 2 ist der Boden zweilagig als ein flüssigkeitsdurchlässiges Stützblech, z.B. ein Lochblech 9', und einen darüber angeordneten Partikelfilter 8', z.B. ein Gittergewebe, ausgebildet. Der Boden ist analog zu Fig. 2 als Flanschboden 20' ausgebildet.

Fig. 3 zeigt analog zu Fig. 1 und 2 auf Höhe der zweiten Sprühvorrichtung 14' bzw. des bevorzugten Schwallreinigers, eine Ableitung im Deckel 10'. Diese ist lediglich optional, da die Ableitung auch über die zweite Sprühvorrichtung erfolgen kann.

In Fig. 3 kann die Zuleitung über eine separate Abzweigung der Zuleitung zum Boden außerhalb des Maischetanks erfolgen. Beide Zuleitungen, die Abzweigung und die Hauptzuleitung können über nicht-dargestellte Ventile eingestellt werden. Dabei erfolgt eine bodenseitige flächige gleichmäßige Zuführung, bei welcher sich allerdings Strömungskanäle im Malz ausbilden können, welche durch die Sprühvorrichtung 11' vorteilhaft zerstört werden.

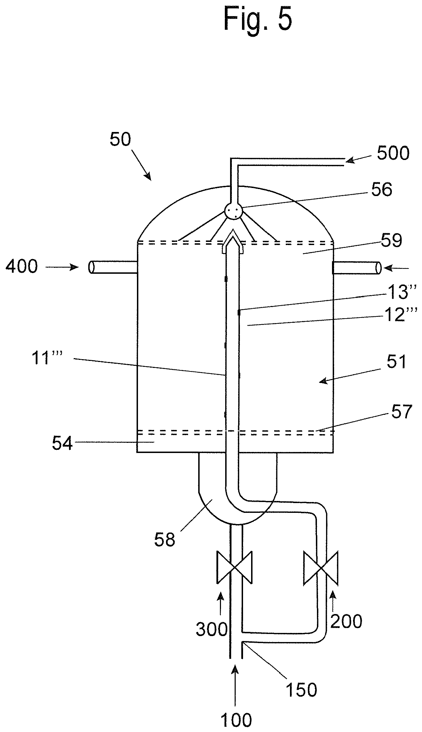

Die Zuleitungen und Ventile können auch analog zur Fig. 5 erfolgen.

In Fig. 4 ist eine Variante eines Sprührohr-Abschnitts dargestellt, wie er u.a. in Fig. 3 oder 5 eingesetzt werden kann. Das Sprührohr 12" als Teil einer Sprühvorrichtung 11" weist, bei entsprechend dicker Wandung Schrägbohrungen als Öffnungen 13"auf, so dass die Einleitung des Brauwassers nicht zwingend senkrecht zur Längsachse sondern auch schräg dazu erfolgen kann. Dabei ist ein Winkel zwischen 60-120° optimal.

In Fig. 4 ist der Kegel 21" erkennbar auf den Rohrschaft 31" aufgesetzt.

Fig. 5 zeigt eine weitere Variante eines Maischebehälters bzw. Maischetanks 50 im Rahmen der vorliegenden Erfindung. Ausgehend von einer Zuleitung 100 außerhalb des Maischebehälters 50 erfolgt eine Verzweigung 150 in eine Zuleitung für die erste Sprühvorrichtung 11‴ und für eine bodenseitige flächige Zuführung über den Boden 57.

Bei der bodenseitigen flächigen Zuführung wird das Brauwasser über eine bodenseitige Wanne 58 zugeleitet, so dass diese im Bodenbereich 57 über die Breite des Maischebehälters 50 zugeführt werden kann wobei das Brauwasser den zweilagigen Boden 57 durchdringt und nach oben steigt. Der zweilagige Boden ist analog zu Fig. 1-3 ausgebildet und kann ein gelochtes Stützblech und einen Partikelfilter umfassen. Unterhalb des Bodens 57 ist ein Verteilerraum 54 angeordnet.

In Fig. 5 ist nur ein Modul dargestellt. Auch hier ist ein zweilagiger Boden 57 vorgesehen. Allerdings kann auch im oberen Bereich, also im Bereich des Deckels 10‴ unterhalb des Schwallreinigers als zweite Sprühvorrichtung 56, ein zweilagiges Flächenelement 59, analog zum Boden 57, vorgesehen sein. Dieses zweilagige Flächenelement 59 verhindert das Anheben eines Malzballens bei der Flutung des Maischebehälters von unten. Es ist somit eine Rückhaltevorrichtung.

Eine optionale dritte Sprühvorrichtung 400 zum seitlichen Einführen von Brauwasser in den Maischebehälter 50, analog zu Fig. 1-3, ist ebenfalls vorgesehen.

Die Zuleitung 100 weist nach der Verzweigung 150 zwei Ventile 200 und 300 auf, welche eine Zuleitung wahlweise über den Boden oder über die erste Sprühvorrichtung 11‴ einzeln oder zeitgleich erlauben. Diese Ventile 200 und 300 für einen Druckaufbau zeitweise geschlossen und anschließend wahlweise geöffnet werden.

Viele weitere Details können direkt aus den vorhergehenden Figuren entnommen werden. Besonders zu erwähnen ist, dass die Sprühvorrichtungen der Fig. 1 und 2 vorteilhaft gemeinsam mit der Sprühvorrichtung der Fig. 3-5 in einem Maischebehälter eingesetzt werden können.

## Patentansprüche

1. Vorrichtung zum Brauen, insbesondere von Bier, mit mindestens einem Maischebehälter (1, 1', 50) mit einer Längsachse (A) und einem Würzekochbehälter (2), wobei in den mindestens einen Maischebehälter (1, 1', 50) eine erste Sprühvorrichtung (11, 11'. 11", 11‴) am Bodenbereich des Maischebehälters (1, 1', 50) derart angeordnet ist, dass die Sprührichtung (11, 11'. 11 ", 11‴) quer zum Maischebehälter (1, 1', 50) in einem Winkel von 60° bis 120° gegenüber der Längsachse (A) des Maischebehälters (1, 1', 50) erfolgt,
**dadurch gekennzeichnet,**
**dass** die erste Sprühvorrichtung (11, 11'. 11", 11‴) mindestens ein im Maischebehälter (1, 1', 50) vertikal angeordnetes und nach oben abgeschlossenes Sprührohr (12. 12', 12", 12‴) mit mindestens einer seitlichen Öffnung (13, 13', 13", 13‴) aufweist.

2. Vorrichtung nach Anspruch 1,
**dadurch gekennzeichnet,**
**dass** die Sprührichtung (11, 11'. 11‴) quer zum Maischebehälter (1, 1') in horizontaler Richtung erfolgt.

3. Vorrichtung nach Anspruch 1 oder 2
**dadurch gekennzeichnet,**
**dass** das Sprührohr (12) Öffnungen (13, 13', 13", 13‴) aufweist, welche oberhalb von 20%, vorzugsweise oberhalb von 30%, besonders bevorzugt auf einem Bereich zwischen 15 und 80%, der Höhe des Maischebehälters (1, 1', 50) auf dessen Längsachse oder parallel zu dieser positioniert sind..

4. Vorrichtung nach einem der vorhergehenden Ansprüche,
**dadurch gekennzeichnet,**
**dass** das Sprührohr (12. 12', 12", 12‴) endständig spitz zuläuft und vorzugsweise einen endständigen spitz-zulaufenden Kegelaufsatz (32, 21") und einen Rohrschaft (31, 31") aufweist, wobei der Kegel (32, 21") auf den Rohrschaft (31, 31") lösbar aufgesetzt ist.

5. Vorrichtung nach einem der vorhergehenden Ansprüche,
**dadurch gekennzeichnet,**
**dass** das Sprührohr (31, 31") eine Wandung mit einer Wandstärke von mehr als 2 mm aufweist, wobei im Sprührohr (12", 12‴) Öffnungen (13", 13‴) in Form von Kanäle, insbesondere Bohrungen, zur Vorgabe einer Sprührichtung vorgesehen sind und/oder
**dass** das Sprührohr (12. 12', 12", 12‴) zumindest drei seitliche Öffnungen (13, 13', 13", 13‴) im Winkel von 120 Grad am Umfang aufweist.

6. Vorrichtung nach einem der vorhergehenden Ansprüche
**dadurch gekennzeichnet,**
**dass** mehrere vorzugsweise gleichmäßig verteilte Sprührohre (12, 12', 12", 12‴) vorgesehen sind.

7. Vorrichtung nach einem der vorhergehenden Ansprüche
**dadurch gekennzeichnet,**
**dass** am Bodenbereich des mindestens einen Maischebehälters (1, 1', 50) ein Trägersieb (8, 8', 8") und ein Partikelsieb (9, 9', 9") vorgesehen sind.

8. Vorrichtung nach einem der vorhergehenden Ansprüche
**dadurch gekennzeichnet,**
**dass** die erste Sprühvorrichtung (11, 11'. 11", 11‴) auf dem Trägersieb (8, 8', 8") angeordnet ist.

9. Vorrichtung nach einem der vorhergehenden Ansprüche
**dadurch gekennzeichnet,**
**dass** die Sprührichtung der ersten Sprühvorrichtung (11, 11', 11", 11‴) in horizontaler Ebene verstellbar ist.

10. Vorrichtung nach einem der vorhergehenden Ansprüche
**dadurch gekennzeichnet,**
**dass** mehrere Maischebehälter (1, 1', 50) in einer turmartigen Anordnung übereinander angeordnet sind und
**dass** vorzugsweise jeder der Maischebehälter (1, 1', 50) als eine in sich funktionale Baueinheit, welche einen Hohlraum aufweist, welcher bausatzartig miteinander lösbar verbunden sind und
**dass** die Maischebehälter (1, 1', 50) besonders bevorzugt als Baueinheiten über eine Spundverbindung (32) zu der turmartigen Anordnung miteinander verbunden sind.

11. Vorrichtung nach einem der vorhergehenden Ansprüche
**dadurch gekennzeichnet,**
**dass** eine zweite Sprühvorrichtung (14, 14', 56) im oberen Bereich des mindestens einen Maischebehälters (1, 1', 50) oder bei einer turmartigen Anordnung im oberen Bereich des obersten Maischebehälters (1'), insbesondere in einem Deckel (10 10'), vorgesehen ist, wobei die zweite Sprühvorrichtung (14, 14', 56) besonders bevorzugt als Schwallreiniger ausgebildet ist.

12. Vorrichtung nach einem der vorhergehenden Ansprüche,
**dadurch gekennzeichnet,**
**dass** unterhalb der zweiten Sprühvorrichtung (14, 14', 56), im oberen Drittel des Maischebehälters (1, 1', 50) ein Flächenelement (59) angeordnet ist, welches zumindest zweilagig aufgebaut ist, umfassend ein flüssigkeitsdurchlässiges Stützblech, insbesondere ein Lochblech, und einen zum Innenraum gerichteten über dem Stützblech angeordneten Partikelfilter.

13. Vorrichtung nach einem der vorhergehenden Ansprüche
**dadurch gekennzeichnet,**
**dass** eine dritte Sprühvorrichtung (16, 16', 400) mit zwei Sprühdüsen (17, 18, 17', 18') vorgesehen ist, welche an einer Wandung (15, 15') des mindestens einen Maischebehälters (1, 1', 50) sich gegenüberliegend und horizontal oder parallel und horizontal angeordnet sind.

14. Vorrichtung nach einem der vorhergehenden Ansprüche
**dadurch gekennzeichnet,**
**dass** die Vorrichtung zumindest eine Flüssigkeitszuleitung (100) mit einer ersten Teilleitung mit einem Ventil (300) aufweist, wobei die erste Teilleitung vorzugsweise in den Bodenbereich (54) des Maischebehälters (50) mündet und dass die Flüssigkeitszuleitung (100) eine zweite Teilleitung mit einem Ventil (200) aufweist, mit welcher Flüssigkeit über die erste Sprühvorrichtung (11‴) in den Maischebehälter (51) einleitbar ist, wobei die Steuerung des Flüssigkeitszulaufs über die erste Teilleitung und über die zweite Teilleitung über eine Ventilsteuerung der beiden vorgenannten Ventile (200. 300) erfolgt.

15. Vorrichtung nach einem der vorhergehenden Ansprüche,
**dadurch gekennzeichnet,**
**dass** die Ventilsteuerung derart geschaltet ist,
**dass** die beiden Ventile (200, 300) zum Druckaufbau während des Befüllungsvorgangs wechselweise geschlossen werden,
wobei beide Ventile (200, 300) vorzugsweise zeitgleich über ein Zeitintervall zur Generierung eines Flüssigkeitsdrucks geschlossen werden.

## Claims

1. Device for brewing, in particular beer, having at least one mash tank (1, 1', 50) with a longitudinal axis (A) and a wort boiling tank (2), wherein a first spraying device (11, 11', 11", 11‴) is arranged in the at least one mash tank (1, 1', 50) in such a way that the spraying direction (11, 11', 11", 11‴) takes place transversely to the mash tank (1, 1', 50) at an angle of 60° to 120° relative to the longitudinal axis (A) of the mash tank (1, 1', 50),
**characterized in that**
the first spraying device (11, 11', 11", 11‴) has at least one spray tube (12, 12', 12", 12‴) which is arranged vertically in the mash tank (1, 1', 50) and is closed at the top and has at least one lateral opening (13, 13', 13", 13‴).

2. Device according to claim 1,
**characterized in that**
the spraying direction (11, 11", 11‴) takes place transversely to the mash tank (1, 1') in a horizontal direction.

3. Device according to claim 1 or 2,
**characterized in that**
the spray tube (12) has openings (13, 13', 13", 13‴) which are positioned above 20%, preferably above 30%, particularly preferably in a range between 15 and 80%, of the height of the mash tank (1, 1', 50) on its longitudinal axis or parallel thereto.

4. Device according to one of the preceding claims,
**characterized in that**
the spray tube (12, 12', 12", 12‴) tapers towards the end and preferably has a cone attachment (32, 21") tapering towards the end and a tube shaft (31, 31"), wherein the cone (32, 21") is detachably mounted on the tube shaft (31, 31").

5. Device according to one of the preceding claims,
**characterized in that**
the spray tube (31, 31") has a wall with a wall thickness of more than 2 mm, wherein openings (13", 13‴) in the form of channels, in particular bores, are provided in the spray tube (12", 12‴) for specifying a spraying direction and/or
**in that** the spray tube (12, 12', 12", 12‴) has at least three lateral openings (13, 13', 13", 13‴) at an angle of 120 degrees on the circumference.

6. Device according to one of the preceding claims,
**characterized in that**
a plurality of preferably evenly distributed spray tubes (12, 12', 12", 12‴) are provided.

7. Device according to one of the preceding claims,
**characterized in that**
a carrier sieve (8, 8', 8") and a particle sieve (9, 9', 9") are provided at the bottom region of the at least one mash tank (1, 1', 50).

8. Device according to one of the preceding claims,
**characterized in that**
the first spraying device (11, 11', 11", 11‴) is arranged on the carrier sieve (8, 8', 8").

9. Device according to one of the preceding claims,
**characterized in that**
the spraying direction of the first spraying device (11, 11', 11", 11‴) is adjustable in a horizontal plane.

10. Device according to one of the preceding claims,
**characterized in that**
a plurality of mash tanks (1, 1', 50) are arranged one above the other in a tower-like arrangement, and
**in that** preferably each of the mash tanks (1, 1', 50) is connected to one another detachably in a kit-like manner as an intrinsically functional structural unit which has a cavity, and
**in that** the mash tanks (1, 1', 50) are connected to one another particularly preferably as structural units via a bung connection (32) to form the tower-like arrangement.

11. Device according to one of the preceding claims,
**characterized in that**
a second spraying device (14, 14', 56) is provided in the upper region of the at least one mash tank (1, 1', 50) or, in the case of a tower-like arrangement, in the upper region of the uppermost mash tank (1'), in particular in a lid (10, 10'), wherein the second spraying device (14, 14', 56) is particularly preferably designed as a surge cleaner.

12. Device according to one of the preceding claims,
**characterized in that**
a surface element (59) is arranged below the second spraying device (14, 14', 56), in the upper third of the mash tank (1, 1', 50), which surface element is constructed in at least two layers, comprising a liquid-permeable support plate, in particular a perforated plate, and a particle filter arranged above the support plate and directed towards the interior.

13. Device according to one of the preceding claims,
**characterized in that**
a third spraying device (16, 16', 400) with two spray nozzles (17, 18, 17', 18') is provided, which are arranged opposite each other and horizontally or parallel and horizontally on a wall (15, 15') of the at least one mash tank (1, 1', 50).

14. Device according to one of the preceding claims,
**characterized in that**
the device has at least one liquid feed line (100) having a first partial line with a valve (300), wherein the first partial line preferably opens into the base region (54) of the mash tank (50), and
**in that** the liquid feed line (100) has a second partial line with a valve (200), with which liquid can be introduced into the mash tank (51) via the first spraying device (11‴), wherein the control of the liquid feed via the first partial line and via the second partial line takes place via a valve control of the two aforementioned valves (200, 300).

15. Device according to one of the preceding claims,
**characterized in that**
the valve control is switched in such a way that the two valves (200, 300) are alternately closed to build up pressure during the filling process,
wherein both valves (200, 300) are preferably closed simultaneously over a time interval to generate a liquid pressure.

## Revendications

1. Dispositif pour brasser, en particulier de la bière, avec au moins une cuve à trempe (1, 1', 50) possédant un axe longitudinal (A) et une cuve de cuisson du moût (2), dans lequel un premier dispositif de pulvérisation (11, 11', 11", 11‴) est disposé dans l'au moins une cuve à trempe (1, 1', 50) dans la région de fond de la cuve à trempe (1, 1', 50) de telle façon que la direction de pulvérisation (11, 11', 11", 11‴) soit transversale par rapport à la cuve à trempe (1, 1', 50) sous un angle de 60° à 120° par rapport à l'axe longitudinal (A) de la cuve à trempe (1, 1', 50), **caractérisé en ce que** le premier dispositif de pulvérisation (11, 11', 11", 11‴) comporte au moins un tuyau de pulvérisation (12. 12', 12", 12"') disposé verticalement dans la cuve à trempe (1, 1', 50) et fermé vers le haut avec au moins une ouverture latérale (13, 13', 13", 13"').

2. Dispositif selon la revendication 1, **caractérisé en ce que** la direction de pulvérisation (11, 11', 11") est transversale par rapport à la cuve à trempe (1, 1') à l'horizontale.

3. Dispositif selon la revendication 1 ou 2, **caractérisé en ce que** le tuyau de pulvérisation (12) comporte des ouvertures (13, 13', 13", 13"') qui sont positionnées au-dessus de 20 %, de préférence au-dessus de 30 %, en particulier dans une région comprise entre 15 et 80 % de la hauteur de la cuve à trempe (1, 1', 50) sur son axe longitudinal ou parallèlement à celui-ci.

4. Dispositif selon l'une des revendications précédentes, **caractérisé en ce que** le tuyau de pulvérisation (12. 12', 12", 12") forme une pointe à son extrémité et présente de préférence un embout conique (32, 21") formant une pointe à son extrémité et un corps tubulaire (31, 31"), le cône (32, 21") étant posé sur le corps tubulaire (31, 31") de façon amovible.

5. Dispositif selon l'une des revendications précédentes, **caractérisé en ce que** le tuyau de pulvérisation (31, 31") comporte une paroi épaisse de plus de 2 mm, des ouvertures (13", 13"') étant prévues dans le tuyau de pulvérisation (12", 12"') sous la forme de canaux, en particulier de trous percés, pour déterminer une direction de pulvérisation et/ou
**en ce que** le tuyau de pulvérisation (12. 12', 12", 12"') comporte au moins trois ouvertures latérales (13, 13', 13", 13"') sous un angle de 120 degrés sur la circonférence.

6. Dispositif selon l'une des revendications précédentes, **caractérisé en ce que** plusieurs tuyaux de pulvérisation (12, 12', 12", 12‴) sont prévus, de préférence répartis régulièrement.

7. Dispositif selon l'une des revendications précédentes, **caractérisé en ce qu'**un filtre support (8, 8', 8") et un filtre à particules (9, 9', 9") sont prévus dans la région de fond de l'au moins une cuve à trempe (1, 1', 50).

8. Dispositif selon l'une des revendications précédentes, **caractérisé en ce que** le premier dispositif de pulvérisation (11, 11', 11", 11‴) est disposé sur le filtre support (8, 8', 8").

9. Dispositif selon l'une des revendications précédentes, **caractérisé en ce que** la direction de pulvérisation du premier dispositif de pulvérisation (11, 11', 11", 11‴) est réglable dans le plan horizontal.

10. Dispositif selon l'une des revendications précédentes, **caractérisé en ce que** plusieurs cuves à trempe (1, 1', 50) sont superposées dans une disposition en forme de tour et
**en ce que**, de préférence, chacune des cuves à trempe (1, 1', 50) est une unité fonctionnelle en soi, présentant une cavité qui peut être assemblée avec d'autres d'une manière pouvant être défaite à la manière d'un ensemble modulaire, et
**en ce que** les cuves à trempe (1, 1', 50) en tant qu'unités de construction sont assemblées entre elles par un raccord à bondon (32) pour former la disposition en forme de tour.

11. Dispositif selon l'une des revendications précédentes, **caractérisé en ce qu'**un deuxième dispositif de pulvérisation (14, 14', 56) est prévu dans la région de l'au moins une cuve à trempe (1, 1', 50) ou, dans une disposition en forme de tour, dans la région supérieure de la cuve à trempe (1') la plus haute, en particulier dans un couvercle (10, 10'), le deuxième dispositif de pulvérisation (14, 14', 56) étant de préférence conformé comme une tête de lavage rotative.

12. Dispositif selon l'une des revendications précédentes, **caractérisé en ce qu'**est disposé en dessous du deuxième dispositif de pulvérisation (14, 14', 56), dans le tiers supérieur de la cuve à trempe (1, 1', 50), un élément plat (59) qui est construit en au moins deux couches, comprenant une tôle d'appui perméable aux liquides, en particulier une tôle perforée, et un filtre à particules orienté vers l'espace intérieur et disposé sur la tôle d'appui.

13. Dispositif selon l'une des revendications précédentes, **caractérisé en ce qu'**est prévu un troisième dispositif de pulvérisation (16, 16', 400) muni de deux buses de pulvérisation (17, 18, 17', 18') qui est disposé sur une paroi (15, 15') de l'au moins une cuve à trempe (1, 1', 50) en se faisant face et à l'horizontale ou parallèlement et à l'horizontale.

14. Dispositif selon l'une des revendications précédentes, **caractérisé en ce que** le dispositif comporte au moins une conduite d'arrivée de liquide (100) avec une première partie de conduite munie d'une vanne (300), laquelle première partie de conduite débouche de préférence dans la région de fond (54) de la cuve à trempe (50), et **en ce que** la conduite d'arrivée de liquide (100) comporte une deuxième partie de conduite munie d'une vanne (200) avec laquelle du liquide peut être introduit dans la cuve à trempe (51) via le premier dispositif de pulvérisation (11‴), la régulation de l'arrivée de liquide via la première partie de conduite et la deuxième partie de conduite s'effectuant à l'aide d'une commande des deux vannes (200, 300).

15. Dispositif selon l'une des revendications précédentes, **caractérisé en ce que** la commande des vannes est montée de telle manière que les deux vannes (200, 300) soient fermées alternativement pendant le remplissage pour faire augmenter la pression, les deux vannes (200, 300) étant de préférence fermées simultanément pendant un intervalle de temps pour produire une pression de liquide.
